# EUROPEAN PATENT APPLICATION

(11) **EP 1 844 657 A2**
(43) Date of publication of application: **17.10.2007**
(21) Application number: 07111876.4
(22) Date of filing: 18.10.2004
(51) Int. Cl.: A21B 5/02, A21C 15/00, A21D 13/00

(54) **Methods and apparatus for producing a filled food product**

(30) Priority: 20.10.2003 WO PCT/IT03/00646
(62) Divisional of application: 04790544.3
(71) Applicant: Pikono S.r.L., 34170 Gorizia (IT)
(72) Inventor: Boscolo, Rosanno, 30019, Sottomarina (VE) (IT)
(74) Representative: Agostini, Agostino

(57) **Abstract**

The present invention relates to the production of a food product (7) comprising a semi-processed product (1) and a filling (8). The semi-processed product consists of a single whole piece of dough formed into a goblet-like shape having an opening (5) and a cavity (4), partially cooked at a temperature of between 180°C and 250°C.
The method envisages to insert a filling (8) into the cavity (4) through said opening (5), to cook the semi-processed product with the filling therein at a temperature of 30°C to 100°C above the temperature for partially cooking the semi-processed product (1) and to cool down the resulting finished food product (7).
The invention also comprises an apparatus for the implementation of this method.

## Description

### Field of the invention

The present invention relates to a filled food product, and particularly to a method and and an apparatuses for producing the same.

### State of the art

Food products comprising a dough base supporting a filling by the name of pizza, open piadina and the like are well appreciated and known. However, such food products suffer from some drawbacks. The shape and consistency of the dough base make it such that the consumer may not consume them without a suitable support, typically a plate, and is therefore obliged to stop and, de facto, sit down at a table.

It is also known that other food products may be obtained from those above by closing the dough base with the aim of easing consumption without the need for support. By folding the pizza prior to cooking and joining the adjacent edges together, a food product called"calzone" is obtained. On the other hand, the piadina is frequently rolled up so as to enclose the filling therein and leave the dough on the outside.

Thus, consumption without any support becomes much easier for the calzone and for the rolled piadina, than for the pizza and the open piadina respectively. Even these closed food products, however, suffer from some drawbacks. Indeed, the problem related to the spillage of the filling remains. With the calzone, the limited adherence of the edges gives rise to a weakly sealed joint which does not tolerate the mechanical stresses which occur during consumption without a support.

Besides, with the rolled piadina, no type of joint is provided and the filling can freely spill out. The spilling of the filling frequently causes unpleasant drawbacks; for example the risk of staining the consumers clothing or even of causing them burns, particularly if the cooking of the food product has only recently been completed and if the filling is very watery.

The demand for a food product, consisting of a base of dough and a filling, which can be eaten comfortably in the absence of any support without despite this, risking the spillage of the filling with all the drawbacks that this brings, is therefore felt. At the heart of the present invention, are the problems of studying and providing a semi-processed food product which allows the creation of a finished food product which has structural, functional and organolectic characteristics such as to satisfy the needs imposed by the market and, at the same time, of overcoming the above drawbacks with reference to the known food products. Another problem at the heart of the present invention is that of defining a method and an apparatus for the manufacture of the finished food product. Prior patents known to the applicant disclosing technical features similar to the invention, though not always aimed at the same object, are US patents nos. 3 410 691, 3 296 956, 3 615 679 and 4 463 021.

### Summary of the invention

Such problems are solved by the invention according to the appended claims..

Further characteristics and advantages of the food product, of the method and the apparatus for the manufacture thereof according to the invention, will result from the description below of some preferred example embodiments thereof, which are given as a non- limiting indication, with reference to the attached figures, wherein:
Figure 1 represents a perspective view of one embodiment of a semi-processed food product;
Figure 2 represents a cross sectional view of said semi-processed food product;
Figure 3 represents a perspective view of one embodiment of a finished food product;
Figure 4 represents a cross sectional view of said finished food product;
Figure 5 represents by a block diagram the manufacturing process of the semi-processed food product;
Figure 6 represents by a block diagram the manufacturing method of the finished food product, starting from the said semi-processed food product;
Figures 7a and 7b are sectional views of two further embodiments of the semi-processed food product;
Figure 8 represents a perspective view of the apparatus for manufacturing the finished food product, starting from the said semi-processed food product;
Figure 9 represents a perspective view of the finished product emerging from an oven comprised in the apparatus of figure 8 ;
Figure 10 represents a top view showing in section a detail of the oven of figure 8 ;
Figure 11 represents a perspective view of a counter for storing finished food products;
Figure 12 represents a view of the counter of figure 11 in a cross section taken along the line XIV-XIV.

### Detailed description

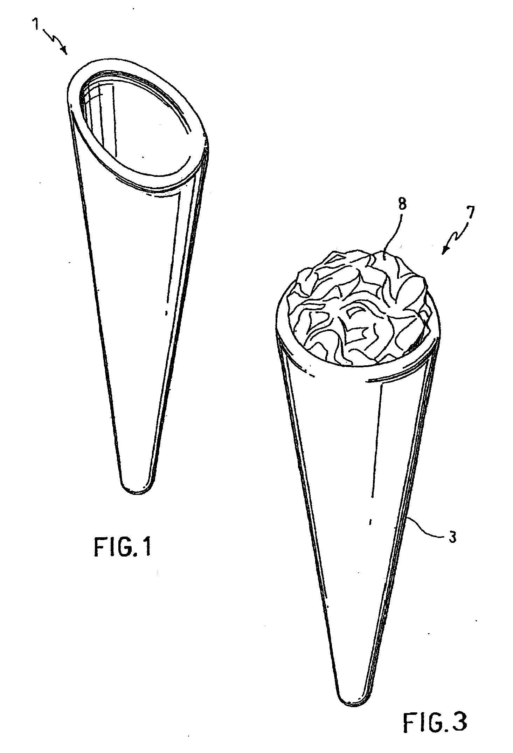

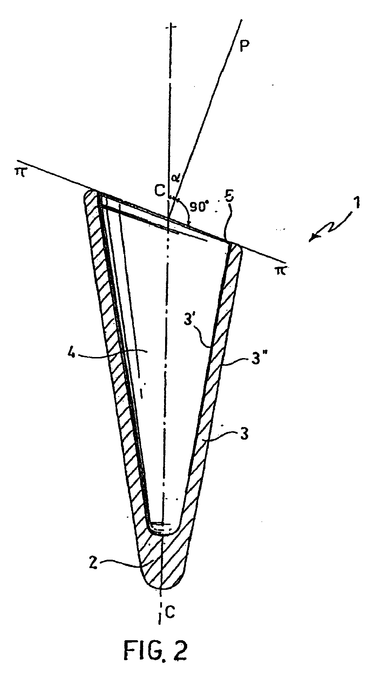

With reference to the attached figures 1, 2, 7a and 7b with 1 is indicated a semi-processed food product in its entirety which is not claimed in the present application.

Such semi-processed product consists of a dough obtained by the partial cooking or pre-cooking of a mixture comprising flour and water. In one preferred embodiment, the mixture also comprises organic yeast. In another embodiment, the mixture comprises a chemical rising agent in place of the organic yeast. In another preferred embodiment, the mixture also comprises cooking salt (NaCl).

With the expression partial cooking it has been meant and hereinafter means a thermal process which, while maintaining the colouration of the mixture more or less unaltered, induces the coagulation of the proteins of the flour (defined below) and the cessation of the vital activity of the organic yeast, if present (defined below). In other words, in the semi-processed, partially cooked product the gluten and the starch of the flour are structured in such a manner that the mixture in its entirety is able to maintain, under the effect of its own weight, the shape which has been conferred upon it.

Furthermore, following the partial cooking process, also not claimed in the present application, the semi-processed product maintains a colour which differs only slightly from the colour of the raw mixture. Finally, in the partially cooked semi-processed product the organic yeast, if present, has ceased its vital activity.

The partial cooking process occurs through the transmission of heat to the mixture and can be accomplished by one or more of the known systems for food preparation.

The effects of the partial cooking develop from the area of the mixture which first receives the transmission of heat and from there spreads towards the remaining mass of the mixture.

With the term flour it has been meant and hereinafter means, a milled product intended for human consumption, particularly of the type obtained from cereals, but also from tubers, from legumes or from other foodstuffs and/or by mixing these various types even in extremely different proportions. In accordance with a preferred embodiment of the invention, the most used type of flour comes from milled wheat.

With the expression organic yeast it has been meant and means hereinafter to identify one or more micro-organism species which are able to produce a gas (carbon dioxide) which makes the dough finely porous. Such micro-organisms, known per se, can be for example of the Saccharomycetes family. In accordance with one preferred embodiment, the yeast used is in its most significant percentage of the type denominated as brewers yeast (Saccharomyces cerevisiae).

With the expression chemical rising agent or mineral rising agent it has been meant and means hereinafter to indicate one or more chemical species (like sodium carbonate, ammonium carbonate and potassium bitartrate) which, particularly when heat is applied to the dough, have an effect on the dough similar to organic yeast.

The semi-processed product, as can be clearly seen from figures 1, 2, 7a and 7b, is shaped as a three dimensional goblet. It is manufactured in a single and whole piece of dough in which a base 2 and a side wall 3 can be identified. In other words the semi-processed product 1 does not comprise any join between the adjacent edges of dough nor any overlapping of the edges of the dough but is a single and whole piece of dough.

The mutual arrangement of the side walls 3 and the base 2 creates a cavity 4 endowed with an opening 5 placing it in communication with the outside. The opening 5 and its edge 9 unambiguously define a plane π whilst the goblet-like shape unambiguously defines an axis c-c.

In accordance with one preferred embodiment, the three dimensional goblet-like shape is that of a cone, preferably of a more or less circular cross section. It has indeed been observed that this shape offers the consumer a particularly comfortable hold.

In accordance with additional embodiments, the axis c-c is inclined and oblique with respect to the plane π of the opening 5 at the tip of the cone itself.

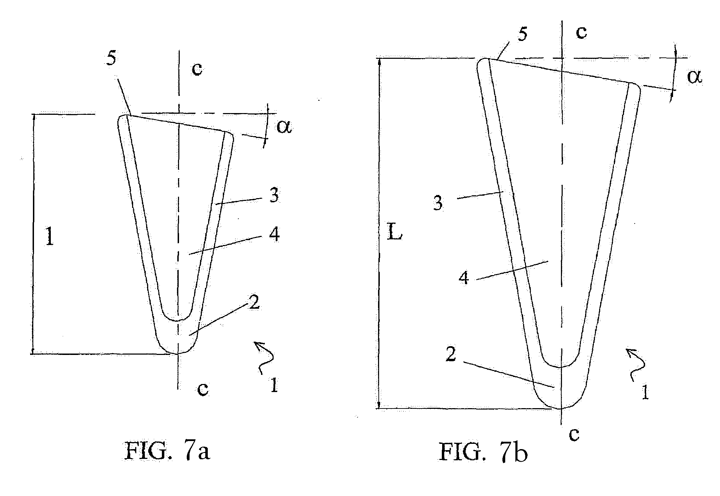

The axis c-c forms with the perpendicular p to the plane π an angle α comprised of between 5° and 45°, preferably between 10° and 34° and still more preferably between 18° and 25°. It has been indeed observed that this inclination has shown itself to be particularly comfortable for the consumer. When the semi-processed product is in the arrangement of normal use, α is the angle formed by the plane π with the horizontal, as shown in Figures 7a and 7b.

The side wall 3 of the semi-processed product has a more or less constant and relatively thin thickness with respect to the overall dimensions of the semi-processed product 10 itself; in particular it is of a predetermined thickness. Two surfaces can be observed thereon, one inner 3' and one outer 3". The fact that the thickness is predetermined and that both surfaces 3 and 3" have come into contact with the heated surfaces, makes it such that the effects of the partial cooking are observable in a more or less homogeneous manner within the entire dough and can be obtained in predetermined times, useful for industrial production.

In accordance with one preferred embodiment, the base 2 has instead a variable thickness the minimum of which is substantially equal to that of the side walls with which it is joined, as better clarified hereinafter.

In another preferred embodiment, the thickness of the side wall 3 is comprised of between 3.5 and 10 millimetres, preferably between 4 and 8 and still more preferably between 5 and 7 millimeters.

In a further preferred embodiment, the maximum thickness of the base 2 is greater than that of the side walls 3 by a factor comprised of between 2 and 7, preferably between 4 and 5. Such proportions of the thickness have shown themselves to be particularly advantageous since they allow to obtain a homogeneous partial cooking in times that are convenient for industrial production.

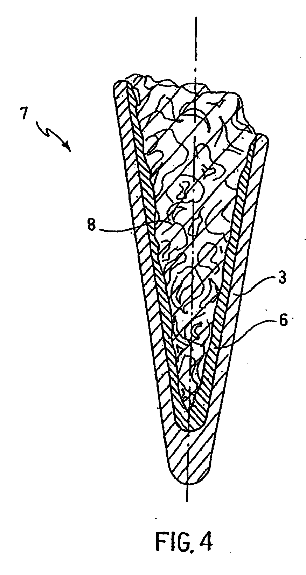

With reference to the attached figures 3 and 4, with 7 is indicated the finished food product in its entirety. Such a finished product is achieved through the cooking of a semi-processed product 1 and a filling 8, in accordance with the appended claims.

With the term cooking it has been meant and hereinafter means a thermal process which, without sensibly changing the characteristics of the dough distributed over the inner thickness of the semi- processed product, gives a more intense and golden-brown colouration on the outer surface thereof and a more crispy consistency. The cooking process, in addition, brings the filling to a temperature and a consistency which are considered optimal for consumption.

The cooking process occurs through the transmission of heat to the dough and can be carried out through one or more of the known systems for the preparation of foodstuffs. Preferably, it will occur by supplying heat to the mixture simultaneously by hot air and infrared irradiation.

In accordance with another preferred embodiment, the filling comprises tomato and spun curd cheese, preferably of the type commonly indicated by the name mozzarella. The filling ingredients are present in the form of small cubes, julienne, thin strips or the like or even in the form of a cream, sauce or the like.

In accordance with a further preferred embodiment, the tomato is present in the form of a layer of sieved tomato 6 which covers the inside of the side wall 3 in a more or less uniform manner.

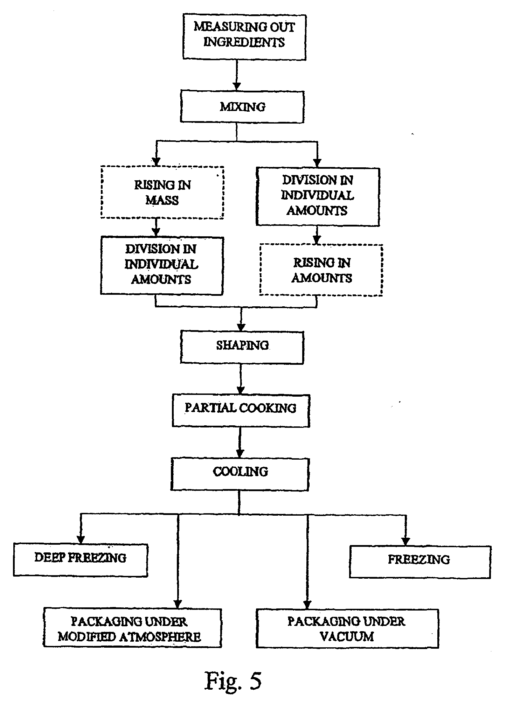

With reference to the block diagram of the attached figure 5, the method for the production of a semi-processed food product as described above. The blocks in dashed lines correspond to an alternative embodiment of the invention.

The method provides firstly the step of measuring out the ingredients for the mixture. Depending on the particular embodiment, the proportions between flour and water present in the mixture can range over a rather wide interval, without departing from the scope of the invention.

For example it is possible, whilst maintaining the traditional proportions used for pizza dough, to opt for the attainment of a higher consistency mixture, by mixing flour and water in the indicative proportions of 1 to 0.5 by weight (for example, for each 100 kg of flour, 50 kg of water are added).

It is otherwise possible to opt to obtain a more fluid mixture, by mixing flour and water in the indicative proportions of 1 to 1 by weight (for example, for each 100 kg of flour, 100 kg of water are added).

It is obviously possible to select any of the intermediate proportions and thus adapt the consistency of the mixture to any possible specific needs.

It is then possible to add organic yeast, chemical rising agents, salt and/or other specific known ingredients to the mixture which may be believed suitable according to specific requirements.

When all the ingredients have been measured out according to requirements, it is necessary to proceed to the mixing step in order to obtain the proper mixture in the form of dough, namely a single and homogeneous mass. The dough is then kept at rest for a duration of time needed to raise it up, to allow the escape of carbon dioxide.

The dough is then divided into individual amounts the weight of which, determined in the known manner, is believed to be suited to the requirements. In accordance with one preferred embodiment, the individual amounts of mixture will have a weight comprised of between approx. 80 and approx. 100 grams.

In an alternative embodiment, the two steps of rising up and dividing the dough into individual amounts may be reversed in order, in such a manner as to make the mixture rise when it is already divided into individual amounts. Whilst the rising of the mixture in a single mass is preferable for the more fluid mixtures, rising in individual amounts is preferable for the higher consistency mixtures.

Each of the individual amounts of mixture must then be formed in such a manner that they assume a three dimensional goblet-like shape, in accordance with that previously described. This shaping step can be obtained by moulding a block of mixture so as to attain of semi-processed product 1 which does not have any joint between the adjacent edges of dough nor any overlapping of the edges of dough, but which is a single and whole piece of dough.

The partial cooking step follows on from the moulding step. In accordance with one particular embodiment of the method, each individual semi-processed product is subjected to a temperature of approx. 210°C for approx. 3 minutes, in such a manner that the coagulation of the flour proteins and the cessation of the vital activity of the organic yeast is induced. It is possible, without despite this departing from the invention, to obtain analogous effects through different combinations of times and temperatures. In general, in order to obtain similar partial cooking effects, the application of slightly lower temperatures (for example approx.180°C) should be extended for slightly longer periods of time (for example approx. 5 minutes) and, vice versa, the application of slightly higher temperatures (for example approx. 250°C) should be extended for slightly shorter periods of time (for example approx. 2 minutes).

In accordance with one preferred embodiment, a cooling step follows on from the partial cooking step of the semi-processed product. In this step, the temperature of the semi-processed product is lowered from the approx. 210 C of the partial cooking step to room temperature.

In accordance with another preferred embodiment, a deep freezing step follows on from the cooling step of the semi-processed product, intended to make possible the preservation of its organolectic characteristics over time. In this step the temperature of the semi-processed product is lowered from room temperature in a few minutes to a temperature of less than -18°C, through the circulation of a gas at a temperature comprised of between approx. -30°C and approx. -40°C.

Despite being conceptually distinct, the steps of cooling and deep freezing may be contiguous and therefore, in practice, distinguished with difficulty.

In accordance with other alternative embodiments, following on from the cooling step may be, rather than the deep freezing step, other steps known per se, which are intended to attain the preservation of the organolectic characteristics of the semi-processed product over time. The cooling step may for example be followed by freezing, packaging under modified atmosphere or packaging under vacuum steps.

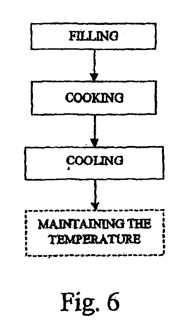

With reference to the attached figure 6, the method for the production of a finished food product as described above, in accordance with the present invention is described in the following. In figure 6, the step indicated by dotted lines is one alternative, useful for carrying out the method in accordance with one variant embodiment thereof.

The method firstly provides a filling step of the partially cooked semi-processed product. In accordance with one embodiment, the filling comprises tomato and spun curd cheese, preferably of the type commonly indicated by the name of mozzarella. The filling ingredients are present in the form of small cubes, julienne, small strips or the like or even in the form of a cream, sauce or the like.

The cooking step follows on from the filling step. Preferably, each individual, filled, semi-processed product is subjected to a temperature of approx. 320°C for approx. 3 minutes, in such a manner that, without sensibly changing the characteristics of the dough distributed over the inner thickness of the semi-processed product, a more intense and golden-brown colour and crispiness are conferred onto the outer surface thereof. In addition, the cooking process, brings the filling to a temperature and a consistency considered to be optimal for consumption. It is possible, although with a less preferable result, to adopt different combinations of times and temperatures, like the application of slightly lower temperatures (for example approx. 280°C) for slightly longer periods of time (for example approx. 5 minutes) or the application of slightly higher temperatures (for example approx. 350°C) for slightly shorter periods of time (for example approx. 2 minutes).

According to one preferred embodiment, the cooking takes place by simultaneously heating the dough and the filling through contact with hot air and through infrared ray irradiation.

Following the cooking step is a brief cooling step to room temperature, sufficient to reduce the outside temperature of the finished product 7 to a value considered to be acceptable for manipulation by the operator and the consumer.

In accordance with one embodiment of the method, following the cooking step, the step of maintaining the finished product 7 at a temperature considered to be ideal for consumption is provided. Such a temperature is preferably comprised of between approx. 60°C and approx. 80°C, still more preferably between approx. 65°C and approx. 75°C. Thus, in the case that it is not possible to consume the finished product 7 immediately following the cooking and cooling steps, the product itself is maintained under optimal conditions for consumption for the time waiting prior to consumption itself.

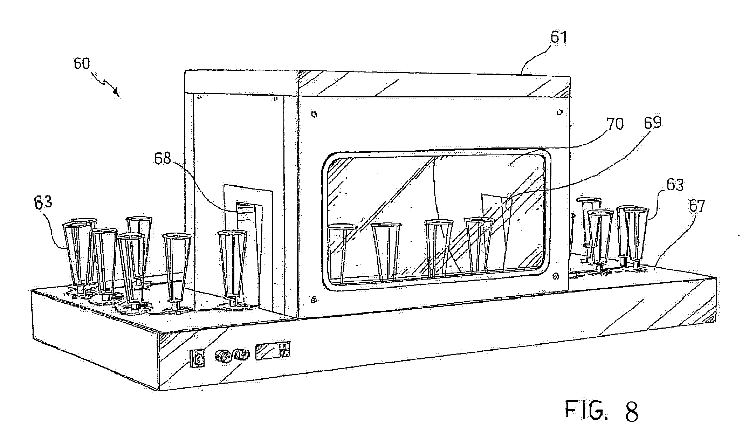

Coming now to Figures 8 to 10, an apparatus for manufacturing a finished food product is generally designated by the reference numeral 60.

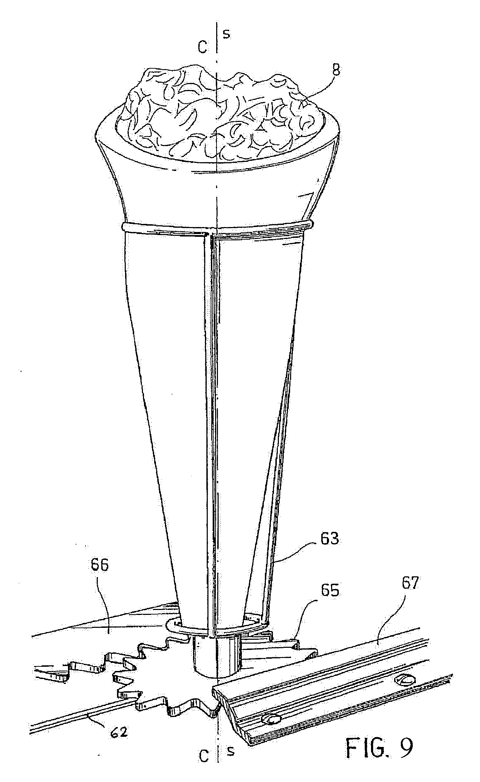

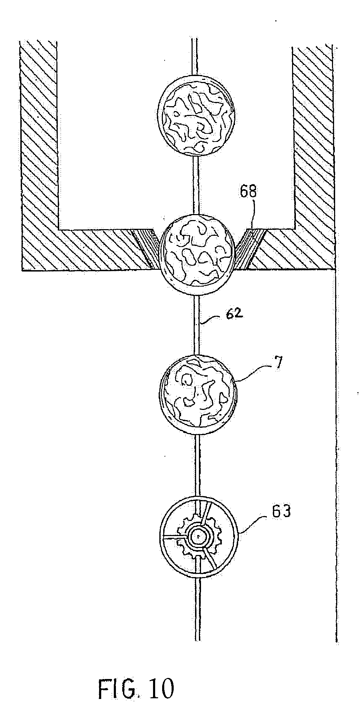

The apparatus 60 comprises an oven 61 having an inlet aperture 68 and an outlet aperture 69, a filling station at the left side of the oven (as represented in Figure 8), a cooling path behind the oven (partially shown in Figure 9) and a drawing chain 62 which moves with a constant speed along a closed path which runs the length of the apparatus. On the drawing chain 62 are located a plurality of baskets 63 (made of a couple of metal rings connected by three rods, as clearly shown in Figures 9 and 10) adapted to hold the semi-finished product 1 and/or the finished product 7 in such a manner that the filling 8 does not spill out and from which the semi-finished product 1 and the filling 8 are not thermally isolated. The drawing chain 62 leads the baskets 63 and the filled semi-finished products 1 supported by them, through the inlet aperture 68, to the interior of the oven 61 where means for producing heat (not shown) are located.

In accordance with one preferred embodiment, such known means for producing heat are able to heat the air contained inside the oven 61 and to directly irradiate the semi-finished product 1 and the filling 8 contained therein.

The means for producing heat must be able to bring the cooking of the semi-processed product and the relevant filling to completion within the time used by each basket 63 to cross the oven at the speed with which it is drawn by the chain 62.

According to a main feature of the invention, the baskets 63 define an axis s-s, which is firstly made to coincide with the axis c-c of the semi-processed product 1 and then with the finished product 7. The apparatus 60 comprises means 64 adapted to make the baskets 63 rotate around the axis s-s, at least during their passage inside the oven 61. Such means 64 comprise for example a cogwheel 65 placed at the base of each basket 63 and adapted to interacting with a rack 66 which runs alongside the chain 62 at least for the distance that this runs inside the oven 61. In this manner, when each basket 63, which is supported by the chain in such a manner as to be free to rotate around its own axis s-s, moves inside the oven, the cogwheel 65 engages the rack 66 and is forced to rotate by this movement, drawing into rotation the entire basket 63 and the filled semi-processed product contained within it. In this manner, the means for the production of heat, particularly those which emit infrared radiation, can act in a more uniform manner over the entire product.

In accordance with one particular embodiment of the apparatus 60, each individual basket 63 and the related filled, semi-processed product are subjected to a temperature of approx. 320°C for around 3 minutes, in such a manner that, without significantly altering the characteristics of the dough distributed on the inner thickness of the semi-processed product, a more intense and golden-brown colouration and a more crispy consistency are conferred on the outer surface thereof. The apparatus 60, furthermore, brings the filling 8 to a temperature and consistency considered to be optimal for consumption.

It is possible, without departing from the invention, to obtain similar effects through different combinations of times and temperatures. In general, in order to obtain similar cooking effects, the application of slightly lower temperatures (for example approx. 280°C) should be extended for slightly longer periods of time (for example approx. 5 minutes) and, vice versa, the application of slightly higher temperatures (for example approx. 350°C) should be extended for slightly shorter periods of time (for example approx. 2 minutes).

When the basket 63 emerges from the oven 61 through the outlet aperture 69, the product which it supports has been transformed in every effect into the previously described finished product 7. In other words, its outer surface has acquired a golden-brown colouration and a crispy consistency which clearly distinguish it from the semi-processed product 1 and the filling contained within it has by now reached the temperature and the consistency considered to be optimal for consumption.

In accordance with one preferred embodiment, the inlet 68 and outlet 69 apertures of the oven, are made in such a manner as to envisage being splayed. As may be observed in figure 10, the part of the aperture on the inner side of the oven is larger than that on the outer side. In this manner it is possible to, at least partially, counteract the air flows which can occur between the inside and outside of the oven due to the different conditions of temperature and pressure which are established during the operation of the means for the production of heat.

As represented in Figure 8, the oven 61 comprises a transparent wall 70 which allows the consumers to follow the steps of cooking of the product.

In accordance with one preferred embodiment, the cooling path comprises a thin plate 67 which runs along the drawing chain 62 overhanging the cogwheel 65 of the basket 63. In this manner the operator cannot remove the basket as soon as this has emerged from the oven 61, i.e. at the time in which its temperature is maximal and potentially dangerous. The thin plate 67 impedes the removal of the basket 63 for a length such that, at the speed with which the chain is moving, it is sufficient to reduce the outer temperature of the finished product 7 to a value considered to be acceptable for handling by the operators and consumers.

When the finished product 7 is removed from the basket 63, a new semi-processed product 1 previously filled with filling 8 may be inserted into the basket. It is thus possible to obtain a continuous production cycle, without any dead time.

It is obvious that the optimal cooking times may be predetermined by taking account of the length of the oven 61 and its internal temperature, and regulating the speed with which the chain 62 moves. It is likewise possible to predetermine the cooling times by taking account of the length of the thin plate 67 and the temperature of the surroundings. In accordance with one preferred embodiment, such known means for producing heat are able to heat the air contained inside the oven 61 and to directly irradiate the semi-finished product 1 and the filling 8.

The means for producing heat must be able to bring the cooking of the semi-processed product and the relevant filling to completion within the time used by each basket 63 to cross the oven at the speed with which it is drawn by the chain 62.

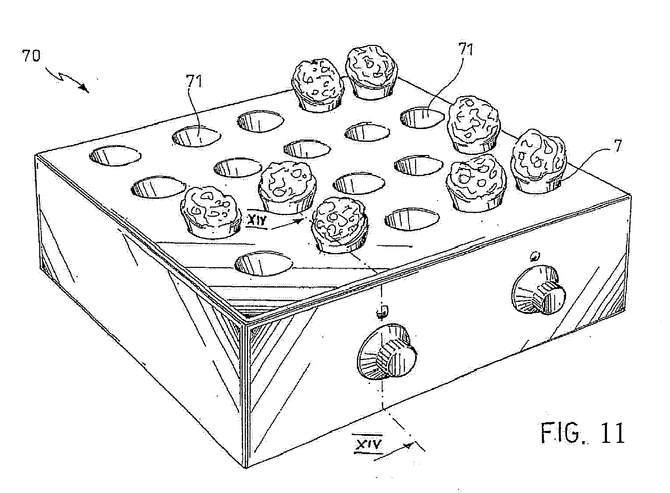

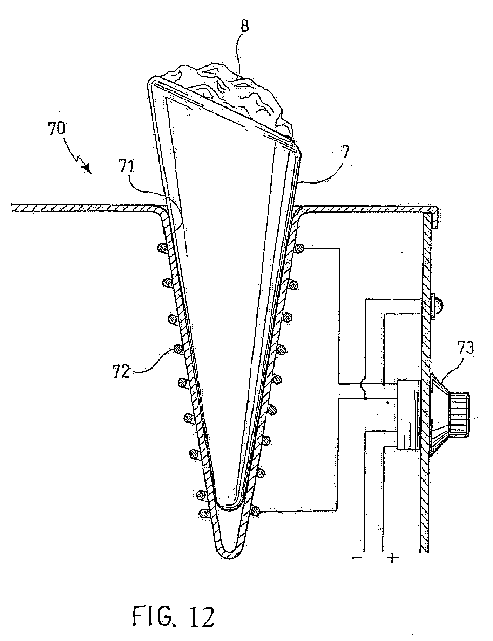

In accordance with one embodiment and with reference to the attached figures 11 and 12, adjacent to the apparatus 60 a heated counter 70 is provided for maintaining the finished product 7 at a temperature considered to be ideal for consumption. Such temperature is preferably comprised between approx. 60°C and approx. 80°C, still more preferably between approx. 65°C and approx. 75°C. Thus, in the event that it is not possible to consume the finished product 7 immediately after the cooking and cooling steps, the product itself is maintained in the optimal conditions for consumption during the time whilst waiting prior to consumption itself. The heated counter 70 comprises cavities 71 which are complementary to the finished product 7. The finished products ready for consumption, are partially inserted into such cavities 71 and maintained in a position such that the filling 8 does not spill out and such that the finished products themselves may be easily held for as long as necessary and then removed from the respective cavity. To such an end, for example, the cavity 71 houses the lower part of the finished product 7 therein, leaving the upper part, which may be held by the operator for the removal of the product, sticking out.

The heated counter 70 comprises means for maintaining the temperature comprised of between approx. 60°C and approx. 80°C, still more preferably between approx. 65°C and approx. 75°C. According to one preferred embodiment, such known means comprise electrical elements 72 which envelop the cavity 71. Such electrical elements 72 are controlled, for example, by a thermostat 73 which is set by the operator. Particularly, the total length of the semi- processed product can be thereby changed, while maintaining the other sizes considered as being optimum unchanged. In the case described above, and illustrated in figure 22, the semi-processed product has the shape of a cone and an aperture forming an angle a to the axis c-c, as described above. If the total length of the cone are changed from 1 to L, the angle a, the cone angle, the thickness of the side walls and the bottom will maintain their optimum values unchanged.

As may be therefore appreciated, the food product according to the present invention allows the satisfaction of the aforementioned needs of being conveniently eaten in the absence of any support without despite this risking the spilling of the filling with the drawbacks that this would bring.

Finally, it is understood that the invention described solves the problems and the drawbacks of the prior art.

To the preferred embodiments of the invention described above, an expert in the art, with the aim of satisfying contingent and specific needs, may bring about numerous modifications, adjustments and substitutions of elements with others that are functionally equivalent, without however departing from the scope of the appended claims.

## Claims

1. A method for producing a food product (7) comprising the steps of:
providing a semi-processed food product (1) formed into a hollow goblet-like shape of a cone aligned along an axis c-c having a cavity (4) and an opening (5) and consisting of a single and whole piece of dough obtained from a mixture comprising water, flour and a rising agent,
partially cooking said semi-processed food product at a temperature comprised of between 180°C and 250°C, preferably at approx. 210° C, for a time comprised of between 2 and 5 minutes, preferably for approx. 3 minutes,
inserting a filling (8) through the opening (5) of the semi-processed product (1) into the cavity thereof (4);
cooking the semi-processed product with the filling therein (7) at a temperature comprised of between between 30 to 100°C above the said temperature of partially cooking for a time comprised of between 2 and 5 minutes., preferably approx. 3 minutes, so as to obtain a finished product;
cooling the finished food product (7) to a temperature preferably comprised of between approx. 65°C and 75°C which is considered to be ideal for consumption.

2. The method in accordance with claim 1, further comprising the step of maintaining said finished food product (7) at said temperature comprised of between 65°C and 75°C in case it is not consumed immediately.

3. An apparatus for producing a finished food product (7) comprising a semi-processed goblet-like product (1) in the shape of a cone having a cavity (4) aligned along an axis c-c and ending with an upper opening (5); which is partially-cooked at a temperature comprised of between 180°C and 250°C, preferably at approx. 210° C, the apparatus comprising:
- a first station in which a filling (8) is inserted through said opening (5) into the cavity (4) of the semi-processed goblet-like product,
- a second station suitable to submit said semi-processed product (1) with the filling (8) therein at a cooking temperature which is comprised between 30°C and 100°C above the temperature used for partially cooking said semi-processed product (1), thus obtaining the finished food product (7),
- a cooling path and
- a drawing chain (62) constituting a closed path traversing said first station, said second station and said cooling path.

4. The apparatus in accordance with claim 3, wherein said second station comprises an oven (61) equipped with means for producing heat selected from the group comprising electrical elements, quartz lamps, wood combustion chambers, gas burners.

5. The apparatus in accordance with claim 3 or 4, further comprising a plurality of baskets (63) defining an axis s-s substantially coincident with the axis c-c of a semi-finished product (1) hold in the same baskets which are adapted to be transported by said drawing chain (62) along said closed path.

6. The apparatus in accordance with claim 5, comprising means adapted to make said baskets (63) rotate around their axis s-s at least along the length inside said oven (61).

7. The apparatus in accordance with claim 6, wherein said means adapted to make said baskets (62) rotate comprise a cogwheel (65) fixed at the base of each basket and adapted to engaging a rack (66) fixed alongside the drawing chain (62).

8. The apparatus in accordance with any of the claims 5 to 7, wherein the baskets (63) are made of a couple of metal rings connected by rods.

9. The apparatus in accordance with claim 5, wherein said cooling path comprises a thin plate (67) which sits beside said drawing chain (62) partially overhanging said baskets (63) and impeding their removal for a length immediately following said oven (61).

10. The apparatus in accordance with claim 3, wherein said oven (61) comprises an inlet aperture (68) and an outlet aperture (69) which are spaced apart from one another.

11. The apparatus in accordance with claim 10, wherein each aperture (68, 69) of said oven (61) is splayed, namely the part of the aperture on the inner side of the oven is larger than that on the outer side.

12. The apparatus in accordance with claim 3, further comprising a heated counter (70) comprising at least one cavity (71) complimentary to a semi-processed food product (1) for maintaining the finished food product (7) at an ideal temperature for consumption if it is not consumed immediately after cooking.

13. The apparatus in accordance with claim 12, wherein said counter (70) is equipped with electrical heating elements for providing said ideal temperature, which comprised of between 60°C and 80°C, preferably between approx. 65°C and approx. 75°C.
